# EUROPEAN PATENT SPECIFICATION

(11) **EP 2 720 784 B1**
(45) Date of publication and mention of the grant of the patent: **01.03.2017**
(21) Application number: 12800572.5
(22) Date of filing: 15.06.2012
(51) Int. Cl.: B01F 5/06, G01N 30/34, B01D 15/18, G01N 30/38, G01N 30/16, G01N 30/28, B01D 15/40, G01N 30/52

(54) **A TURBULENT FLOW MIXING DEVICE FOR USE IN A CHROMATOGRAPHY SYSTEM**
WIRBELSTROM-MISCHVORRICHTUNG ZUR VERWENDUNG IN EINEM CHROMATOGRAPHIESYSTEM
DISPOSITIF DE MÉLANGE À ÉCOULEMENT TURBULENT DESTINÉ À UNE UTILISATION DANS UN SYSTÈME CHROMATOGRAPHIQUE

(30) Priority: 17.06.2011 US 201161498459 P
(43) Date of publication of application: 23.04.2014
(73) Proprietor: Waters Technologies Corporation, Milford, MA 01757 (US)
(72) Inventor: WANG, Ziqiang, Lansdale, PA 19446 (US); LUO, Chuping, Wilmington, DE 19808 (US); SIDHU, Harbaksh, Allison Park, PA 15101 (US)
(74) Representative: Vossius, Corinna
(86) International application number: PCT/US2012/042729
(87) International publication number: WO 2012/174416

(56) References cited:
- WO-A1-2006/017039
- US-A- 4 506 987
- US-A- 5 158 675
- US-A- 5 664 938
- US-A- 5 921 678
- US-A- 6 048 496
- US-A1- 2009 255 601
- US-A1- 2009 275 469

## Description

### RELATED APPLICATIONS

This application claims priority to U.S. Provisional Application No. 61/498,459, filed on June 17, 2011.

### TECHNICAL FIELD

The present technology relates generally to a mixing device for combining at least two fluids in a chromatography system. More specifically, the present technology relates to a turbulent flow mixing device resulting in improved chromatography results, e.g. peak separation, sample focusing.

### BACKGROUND

Liquid-based high efficiency chromatography ("LC") can be used in various applications as a separation tool for identification and purification of crude chemical mixtures. The chromatography process involves passing a mixture dissolved in a mobile phase through a stationary phase, which separates the analyte to be measured from other molecules in the mixture based on differential kinetics between the mobile and stationary phases. Subtle differences in a compound's ability to interact with the mobile versus stationary phase results in differential retention on the stationary phase. These subtle differences lead to the separation of the compounds.

Chromatography can be preparative or analytical in terms of process capacity. Liquid-based chromatography can have various formats based on the characteristics of the components it utilizes in the process. For example, high performance liquid chromatography ("HPLC") uses pure organic solvents as mobile phases, while tubes filled with solid particles (e.g., columns) are used as stationary phases. Supercritical fluid chromatography ("SFC"), is another format that uses the same type of columns used in HPLC, but employs carbon dioxide or other compressible fluids at conditions above the supercritical point as mobile phases, along with cosolvents in some cases, to perform the same type of separation and purification as performed in HPLC systems.

A compressible fluid is one in which the fluid density changes significantly when it is subjected to high pressure. The key difference, in the context of SFC or HPLC, between compressible and incompressible fluids is the way the different fluids behave when pressure is applied to them. In the case of incompressible fluids, e.g. water or methanol, application of a pressure at one point immediately creates identical pressure at all other points in the system.

In the case of a compressible fluid, e.g. supercritical CO₂, the imposition of a force at one point within a system does not result in an immediate increase in pressure elsewhere the system. Instead, the fluid compresses near where the force was applied; that is, its density increases locally in response to the force. This compressed fluid subsequently expands against neighboring fluid particles causing the neighboring fluid itself to compress. In many cases, the net result is the generation of pressure waves as the locally dense fluid moves throughout the system.

The performance of liquid or supercritical fluid based chromatography systems can depend upon fluidic dynamics between mobile and stationary phases, in addition to the nature of the molecules to be separated. Fluidic dynamics of the mobile and stationary phases are in continuous states of equilibrium during the chromatography process. Because of the differences in kinetics upon which the chromatography system is based (e.g., interactions of molecules with both stationary and mobile phases can be very subtle), these equilibrium of states ("EOS") are not constant and are highly susceptible to all kinds of disturbances, such as environmental factors. These disturbances can be, for example, pulsations from imperfect pumping of mobile phase solvents, fluctuations of system pressure, or gradient disturbance from heterogeneous diluents.

It is, therefore, a well accepted doctrine that in LC most operational factors are kept as consistent as possible with the optimized conditions in order to obtain the best result possible. For example, once the chromatographic method parameters are developed, such as the gradient combinations of the mobile phases, it is preferable to have effective mixing of all the individual solvents before they are pumped onto the separation column and mixed with samples. In addition, it is also preferable to prepare all the samples in the diluents with the same composition as it is in mobile phase. This way the injection and loading of samples onto the system will give minimum disturbance to the main flow stream from changes to the mobile phase solvent strength that can impact the separation.

These guidelines are, however, not always followed in practice for many reasons. First, in most LC cases, the normally laminar flow based design of the mixing chamber for solvents can depend on the actual operational parameters to determine whether mixing will be effective. For example, if the two solvents possess different physical properties such as density, viscosity and/or miscibility, it can be difficult to get a thorough mixing. In addition, the pressure from the chromatography system can have a profound impact on the effectiveness of mixing. Second, the diversified nature of analyte molecules can make it difficult to prepare the analyte/sample with the exact same composition diluents as mobile phases, simply based on the solubility factor. As a result, the sample injected onto the system can have a different solvent strength than the mobile phase. This can disrupt the equilibrium of states, and diminish the process efficiency. Third, in the case of SFC, since the major component of mobile phase are compressible fluids, such as supercritical carbon dioxide, it is practically impossible to prepare the samples in the same composition of diluents as in mobile phase because the samples are in ambient atmospheres prior to being injected onto the system and not under pressurized conditions like the compressible fluids.

A device for mixing high-pressure fluids (gases or liquids) for chromatography applications is disclosed in WO2006/017039.

### SUMMARY OF THE INVENTION

The present invention features a mixing device for combining at least two fluids in a chromatography system. A first mixing device of the invention is defined in claim 1. A second mixing device of the invention is defined in claim 2. The device can be used to thoroughly mix two
or more mobile phases that may have such different physical properties (e.g. density, viscosity, and polarity) that thorough mixing via laminar flow may otherwise be inefficient.

The device further enables thorough mixing between two different components of a mobile phase in SFC. For example, it enables mixing a compressible fluid such as carbon dioxide (CO₂) and a modifier solvent, i.e. an incompressible fluid, for the mobile phase such as methanol. The present device also enables thorough dissolution of the analyte within the combined mobile phase. Thus, upon exiting the mixing device of the current invention the analyte and mobile phase exist as a homogenous mixture prior to entering the separation column.

The device further enables thorough mixing between two different components of a mobile phase in HPLC. Often, the components of an HPLC mobile phase will have different densities, viscosities, and polarities. For example, a mobile phase might comprise a nonpolar component and a polar component in addition to the sample. Because of their different physical properties, these components may mix slowly under laminar flow despite being miscible. The current technology enables thorough mixing of all components of the mobile phase along with the analyte, giving rise to a homogenous mixture prior to entering the separation column.

In one embodiments, the packing material comprises a plurality of particles. In one embodiment, the plurality of particles have a size between about 1 micron to about 10,000 microns. In one embodiment, the surface of the plurality of particles is chemically inert. In one embodiment, the plurality of particles comprise an inorganic material, a metal oxide, a polymer, or a combination thereof. In one embodiment, the exterior housing of the device comprises stainless steel.

In one embodiment, the plurality of particles are hollow. In one embodiment, the packing material is a porous monolith. In one embodiment, the porous monolith is a silica gel monolith. In one embodiment, the packing material is more retentive to the analyte of interest than to the mobile phase, such that a sample is retained for a longer period of time than a mobile phase. For example, the packing material may be non-retentive to the mobile phase, but somewhat retentive to the analyte of interest, such that a sample is retained for a longer period of time than a mobile phase in order to ensure a more narrow bolus of the analyte of interest. In one embodiment, the device comprises an inlet at the first end of the exterior housing and an outlet at the second end of the exterior housing. In an example not forming part of the invention, the inlet and outlet are asymmetrically oriented about an axis from the first end to the second end of the exterior housing.

In another aspect, a device according to the invention is used in a high-performance liquid chromatography system or a supercritical fluid chromatography system. The chromatography system may include a first pump and a second pump. The first pump can pump a first flow stream comprising first fluid and the second pump can pump a second flow stream comprising a second fluid. The second pump is in parallel with the first pump. A turbulent flow mixing device containing a cartridge is located after the first and second flow streams are combined. In some examples , the mixing device is located after an injection point of a sample. The turbulent flow mixing device is configured to create a turbulent flow condition to mix at least the first flow stream and the second flow stream and to provide flow through the mixing device during operation of the chromatography system. A column is located downstream of the cartridge and a detector is located downstream of the column.

In one example of the chromatography system, a heater is located downstream of the mixing device. In another example , an injector for injecting a sample into the second flow stream is located upstream of the mixing device. In one aspect the mixing device is configured to retain the sample for a longer period of time than the first and second fluids. In one aspect, the first fluid is a compressible fluid and the second fluid is an incompressible fluid.

In another aspect, the present disclosure features a method. The method is directed to enhancing peak signal in HPLC or SFC. The method includes pumping a first flow stream comprising a first fluid and pumping a second flow stream comprising second fluid. The method also includes injecting a sample into the second flow stream or the combined flow stream. The first and second flow streams along with the injected sample are turbulated in a cartridge. The method also includes flowing the turbulated flow stream through a chromatography column and detecting at least a portion of the sample.

In some examples of the method, the first and second flow streams are combined prior to turbulating. In some embodiments, the first and second flow streams are combined in the cartridge. In some examples, the sample is retained within the cartridge for a longer period of time before entering the column. By retaining the sample for a longer period of time, sample focusing is achieved.

The exemplary devices and methods of the present disclosure provide numerous advantages. For example, the technology significantly improves the reliability of chromatography, for example SFC, by ensuring that conditions are kept more constant across different runs, i.e. compensating for operational factors by improving mixing through turbulating flow. This increased reliability makes chromatography, for example SFC, a more robust process for separating complex mixtures overall. Additionally, the technology helps focus the sample prior to its entering the chromatography column by helping retain the sample for a longer period of time than the mobile phase. The sample focusing helps ensure that a more narrow bolus of sample enters the column. By ensuring that conditions are more constant across runs and ensuring a narrow bolus of sample enters the chromatography column, the technology allows for greater peak separation. Greater peak separation provides improved results and more rapid analysis.

### BRIEF DESCRIPTION OF THE DRAWINGS

The advantages of the technology described above, together with further advantages, may be better understood by referring to the following description taken in conjunction with the accompanying drawings. The drawings are not necessarily to scale, emphasis instead generally being placed upon illustrating the principles of the technology.
FIG. **1A** is a cartridge, according to an illustrative example of the technology.
FIG. **1B** is a cartridge holder, according to an illustrative example of the technology.
FIG. **1C** is a mixing device, according to an illustrative example of the technology.
FIG. **2** is a chromatography system including a mixing device, according to an illustrative example of the technology.
FIG. **3A** is a chromatogram showing the improvement of using a mixing device in a chromatography system on early eluters with modifier-stream injection, according to an illustrative example embodiment of the technology.
FIG. **3B** is a chromatogram showing the improvement of using a mixing device in a chromatography system on early eluters with mixed-stream or combined-stream injection, according to an illustrative embodiment of the technology.
FIG. **4A** is a chromatogram showing the improvement of using a mixing device in a chromatography system on mid to late eluters with modifier-stream injection, according to an illustrative embodiment of the technology.
FIG. **4B** is a chromatogram showing the improvement of using a mixing device in a chromatography system on mid to late eluters with mixed-stream or combined-stream injection, according to an illustrative embodiment of the technology.
FIG. **5** is a schematic illustration of conical shaped flow chamber, according to a first mixing device of the invention.
FIG. **6** is a schematic illustration of a gradual expansion chamber, according to a second mixing device of the invention.
FIG. **7** is a schematic illustration of an asymmetrical aligned inlet/outlet flow chamber, not forming part of the present invention.

### DETAILED DESCRIPTION

Devices and designs for effective solvent mixing can improve the chromatographic process. The processes can consist of flow-through designs that are based on turbulence-flow fluidic dynamics theories which can have higher effectiveness on solvent mixing, compared to laminar-flow based design mixing chambers that are commonly used in many LC applications. The improvement to chromatography systems, in terms of peak shape, loading capacity, and sensitivity by using a turbulent flow mixing device in the chromatography system can improve the gradient profile of the mobile phase composition of the system, e.g. provide improved results through peak separation.

A flow-through type mixing device has been developed and demonstrated to significantly improve chromatography (e.g., HPLC and/or SFC) system performance. The mobile phase/gradient profile can be optimized to minimize the disadvantages of low-strength nature of supercritical carbon dioxide in the flow stream. The peak shape, peak symmetry, and resolution can be improved significantly with the use of the mixing device, and the column loading capacity can be increased by about 3 to 5 times. In embodiments, the mixing device employs elements which focus the bolus of sample and provide multiple turbulent flow paths for greater mixing to achieve improved results.

In SFC, while the use of carbon dioxide as the supercritical fluid can show the most advantages of using this technique, it has also long been noted that the peak performance and the loading capacity may not be as good as than in HPLC, even when the same type of LC column is used in SFC. Various studies have demonstrated that this is mostly due to the inherent non-polar and low-strength nature of carbon dioxide. A new type of mixer has been designed in terms of chromatographic and geometric improvisions to the flow profiling.

The use of the turbulent flow mixing device, or peak enhancer, can significantly improve the mobile phase profile and reduce the solvent shock due to stronger sample injections. The peak shapes, symmetry, and resolution can be improved by using the mixing device. In addition, the sample loading capacity can be increased by about 3-5 folds, e.g., to the same level as in traditional HPLC systems. These improvements can be due, at least in part, to the improved mixing of the samples, solvents and/or mobile phase. More specifically, the internal geometry of the chamber by itself, or in some embodiments, together with the particles, is designed to provide turbulent flow conditions through at least a portion of the chamber such that the mobile phase and solvents are thoroughly mixed.

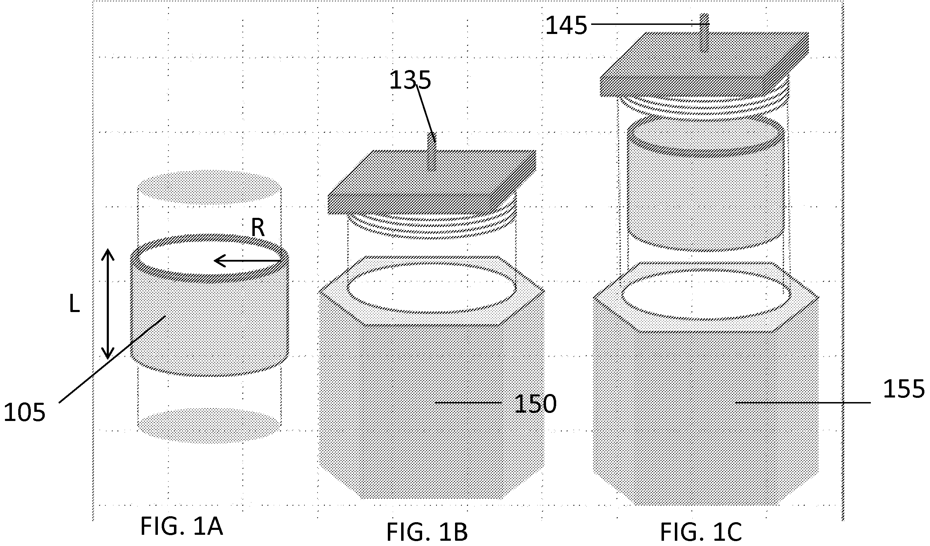

FIG. **1A** shows a cartridge having a defined length (L) and radius (R). FIG. **1B** shows a cartridge holder with an outer casing **150** and an outlet port **135,** and FIG. **1C** shows mixing device having an outlet port **145** and an outer casing **155.** The mixing device can be a type of flow-through cartridge with a chamber of various internal geometries. The chamber can be filled with different types and sizes of filling particles. An external closure made of, for example, stainless steel or another type of material that provides external protection, can be used. In addition, hydraulic flow connection fittings, for example, a cap with ports/threads, a cap with at least one o-ring, or a frit with flow channels, can also be used.

In some examples , the mixing device includes a chamber that can have various geometries, including, for example, a straight cylinder type chamber similar to chambers used in chromatography columns. The chamber can have other types of geometries or shapes that can promote a desired functionality, for example, cone-shaped, concave shaped, or concave end shaped. The chamber can have multiple flow paths.

The chamber can be filled or at least partially filled with particles or a porous monolith to create effective turbulence flow condition for maximum mixing performance. The sizes of particles or voids can range from a few micron to tens of thousands microns. In addition, the surface properties of the particles or monoliths can range from total inertness in chemical terms, to different degrees of affinity, adsorption, lipophilicity and steric factors. The materials of the particles or monoliths can range from inorganic based materials, e.g., silica gels, metal oxides like zirconium, or titanium oxide, to polymer based materials, e.g., polystyrene-divinylbenzene (PSDVB). The chamber can be enclosed in a high pressure rated stainless steel vessel, for example, the cartridge holder of FIG. **1B****,** to accommodate for intended application.

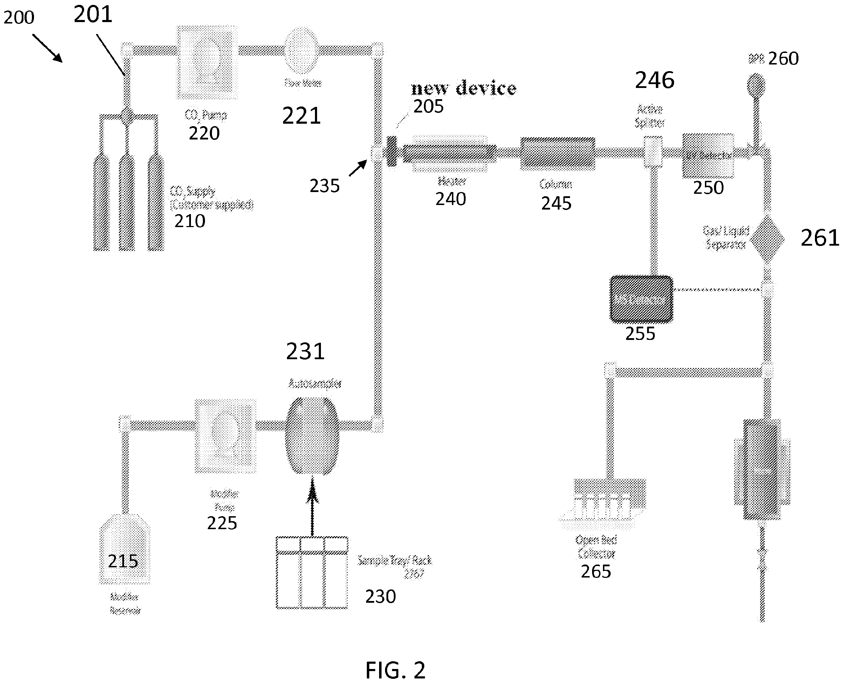

FIG. **2** shows a chromatography system **200** including a mixing device **205.** The chromatography system **200** is interconnected by robust tubing **201** that is able to withstand the demands of SFC without safety issues or corrosion. In an embodiment of a method of the invention, directed to SFC, the CO₂ pump **220** pumps an output flow stream from solvent supplies (e.g., CO₂ supply **210)** and a modifier pump **225** pumps a modifier supply (e.g. methanol) from the modifier reservoir **215.** The rate of the flow of the compressible fluid is monitored by a flow meter **221.** Sample is stored in the sample rack **230** and is injected into the modifier supply flow stream via the autosampler **231** and gets mixed with the compressible fluid (e.g. CO₂) at location **235.** The combined flow stream is then turbulated in the turbulent flow mixing device **205** to ensure efficient mixing. The flow stream can then pass through an optional in-line heater **240,** in direct fluid communication with mixing device **205,** and onto a chromatographic column **245** where the separation of molecules occurs. Next this separated band of molecules can pass through an active splitter **246** which directs a portion of the flow to various types of detectors (e.g., a UV Detector **250** and/or an MS Detector **255)** for diagnosis and collection purposes. The flow is then further directed through an automated back pressure regulator ("BPR") **260** if there are compressible fluids in the flow stream. Next the flow stream moves through an optional gas/liquid separator **261** towards and open-bed fraction collector **265,** maintained at a reduced pressure setting, or at atmospheric pressure. The flow stream can comprise a high pressure, monophasic fluid of 1) one or more incompressible liquids, in solution with 2) one or more highly dissolved gasses, liquefied gasses or supercritical fluids, and 3) dissolved solutes of interest. The mixing device **205** can be integrated into this chromatographic system **200,** preferably after sample introduction **230,** but before optional heater **240** and the chromatography column **245.** In one embodiment, the mixing device **205** is located in close proximity to the location of sample introduction **230.**

A similar method for HPLC is possible. Techniques can be implemented with HPLC solvents which do not include the BPR **260** or the gas liquid separator **261.**

To test the effectiveness of the turbulent flow mixing device when used in a chromatography system, tests were performed on a PrepSFC-80 system, with either 5 or 10% of methanol ("MeOH") as the modifier total flow running at 60 mg/min. and 100 bar of back pressure holding. The column was a 5µm 19x150 mm of Waters Viridis SFC 2-EP with temperature maintained at 35°C during the separation process. Compounds (e.g., trans-stilbene-oxide, caffeine, amcinonide, 3,3-diphenylpropionic acid, 3-aminobenzoic acid, and sulfamethazine) were dissolved in dimethyl sulfoxide ("DMSO") and MeOH. The detecting wavelength was 270 nm for the early eluters (e.g., trans-stilbene-oxide and caffeine) and 254 nm for the mid to late eluters (e.g., amcinonide, 3,3-diphenylpropionic acid, 3-aminobenzoic acid, and sulfamethazine).

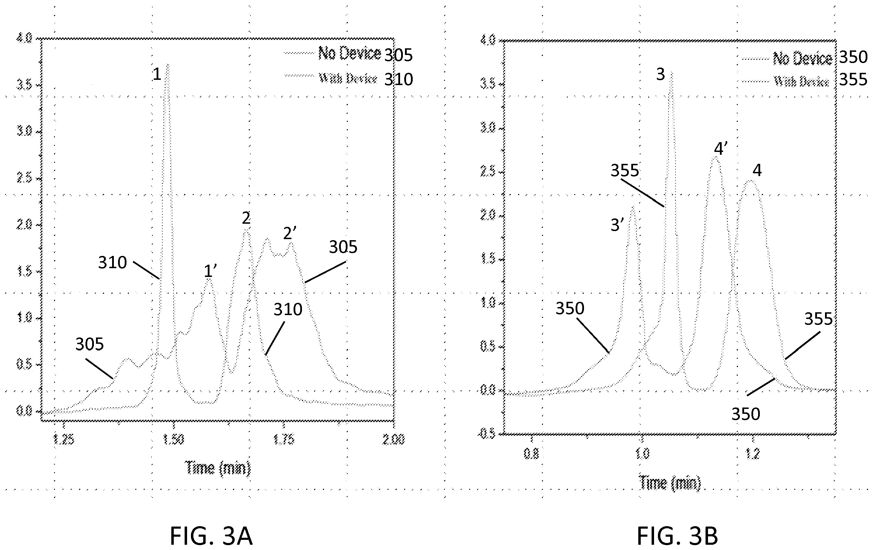

FIG. **3A** shows a chromatogram showing the improvement of using a mixing device in a chromatography system on early eluters with modifier-stream injection and FIG. **3B** shows a chromatogram showing the improvement of using a mixing device in a chromatography system on early eluters with mixed-stream injection. FIGS. **3A** and **3B** show eluted peaks with less than 2 minutes from retention on the chromatography column has shown narrower and sharper peak shapes with device in the system, and in both modifier-stream and mixed stream injection modes, the two different modes of sample introduction for a chromatography application. Referring to FIG. **3A**, the peaks of the chromatogram with the mixing device **310** are shaper and narrower than the peaks of the chromatograpm without the mixing device **305.** Peak 1 represents a trans-stilbene-oxide peak when the mixing device is used in the chromatography system while peak 1' represents a trans-stilbene-oxide peak when the mixing device is not used in the chromatography system. Peak 1 is sharper and narrower than peak 1'. Similar, peak 2 represents a caffeine peak when the mixing device is used in the chromatography system while peak 2' represents a caffeine peak when the mixing device is not used in the chromatography system. Peak 2 is sharper and narrower than peak 2'.

Similar results were obtained when the mixed stream injection method was used in the chromatography system. Referring FIG. **3B****,** the peaks of the chromatogram with the mixing device **355** are shaper and narrower than the peaks of the chromatograpm without the mixing device **350.** Peak 3 represents a trans-stilbene-oxide peak when the mixing device is used in the chromatography system while peak 3' represents a trans-stilbene-oxide peak when the mixing device is not used in the chromatography system. Peak 3 is sharper and narrower than peak 3'. Similarly, peak 4 represents a caffeine peak when the mixing device is used in the chromatography system while peak 4' represents a caffeine peak when the mixing device is not used in the chromatography system.

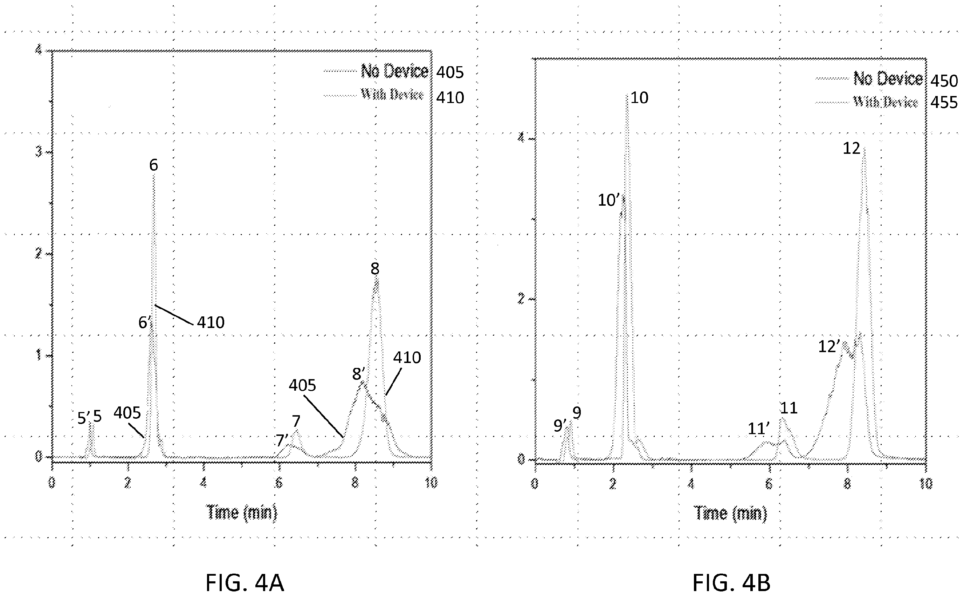

FIG. **4A** shows a chromatogram showing the improvement of using a mixing device in a chromatography system on mid to late eluters with modifier-stream injection and FIG. **4B** shows a chromatogram showing the improvement of using a mixing device in a chromatography system on mid to late eluters with mixed-stream injection. As shown in FIGS. **4A** and **4B****,** the mixing device improves the chromatagrams for mid to late eluters similar to that of early eluters (see, e.g., FIGS. **3A** and **3B****).** Referring to FIG. **4A****,** the peaks of the chromatogram with the mixing device **410** are shaper and narrower than the peaks of the chromatograpm without the mixing device **405.** Peak 5 represents an amcinonide peak when the mixing device is used in the chromatography system while peak 5' represents an amcinonide peak when the mixing device is not used in the chromatography system. Similarly, peak 6 represents a 3,3-diphenylpropionic acid peak when the mixing device is used in the chromatography system while peak 6' represents a 3,3-diphenylpropionic acid peak when the mixing device is not used in the chromatography system. Peak 6 is sharper and narrower than peak 6'. Peak 7 represents a 3-aminobenzoic acid peak when the mixing device is used in the chromatography system while peak 7' represents a 3-aminobenzoic acid peak when the mixing device is not used in the chromatography system. Peak 7 is sharper and narrower than peak 7'. Peak 8 represents a sulfamethazine peak when the mixing device is used in the chromatography system while peak 8' represents a sulfamethazine peak when the mixing device is not used in the chromatography system. Peak 8 is sharper and narrower than peak 8'.

Similar results were obtained when the mixed stream injection method was used in the chromatography system. Referring FIG. **4B****,** the peaks of the chromatogram with the mixing device **455** are shaper and narrower than the peaks of the chromatograpm without the mixing device **450.** Peak 9 represents an amcinonide peak when the mixing device is used in the chromatography system while peak 9' represents an amcinonide peak when the mixing device is not used in the chromatography system. Peak 9 is sharper and narrower than peak 9'. Similarly, peak 10 represents a 3,3-diphenylpropionic acid peak when the mixing device is used in the chromatography system while peak 10' represents a 3,3-diphenylpropionic acid peak when the mixing device is not used in the chromatography system. Peak 10 is sharper and narrower than peak 10'. Peak 11 represents a 3-aminobenzoic acid peak when the mixing device is used in the chromatography system while peak 11' represents a 3-aminobenzoic acid peak when the mixing device is not used in the chromatography system. Peak 11 is sharper and narrower than peak 11'. Peak 12 represents a sulfamethazine peak when the mixing device is used in the chromatography system while peak 12' represents a sulfamethazine peak when the mixing device is not used in the chromatography system. Peak 12 is sharper and narrower than peak 12'.

The above results show a drastic reduction in peak width, which in turn improves the analysis and results of the chromatogram. For example, in embodiments of the present technology, peak width reductions over conventional methods not employing the device realize peak width reductions of 30% or more. For example, reduction of 30-50%, 30-75%, 30-100%).

The use of the turbulent flow mixing device, or peak enhancer, can significantly improve the mobile phase profile and reduce the solvent shock due to stronger sample injections. The peak shapes, symmetry, and resolution can be improved by using the mixing device. In addition, the sample loading capacity can be increased by about 3-5 folds, e.g., to the same level as in traditional HPLC systems.

The mixing device according to the invention utilizes advantageous geometric optimization for the mixing chamber to achieve a more homogeneous distribution profile of all solvents inside the mixing chamber. The trajectory and dimensions of the chamber can enable a more consistent and thorough mixing of solvents and can result in a less parabolic flow profile, which is commonly seen in most current LC designs. It should be appreciated by one of ordinary skill in the art, that the particular internal geometry of the chamber can be optimized based upon the fluids (e.g., MeOH and/or CO₂) to be mixed and the operation conditions (e.g., temperature, pressure and/or vibration) to provide turbulent flow of the fluids through at least a portion of the chamber. In some embodiments, the internal chamber can be designed such that the flow path of the fluid entering the mixing device is non-linear. This non-linear flow path can create turbulent flow of the fluid in the chromatography system and provide for better mixing.

The shape of the flow chamber is important for the mixing of the two or more flow streams that enter the mixing device. Importantly, the flow chamber within the mixing device does not give rise to a laminar flow of fluid. Such a laminar flow would prevent effective mixing between two separate flow streams, because laminar flow implies parallel movement of different streams. Instead, the shape of the flow chamber in connection with its packing material is designed to give turbulent flow to facilitate mixing. It does so by leveraging a number of possible geometries that force fluids to change trajectory along the flow path, thus creating more turbulence.

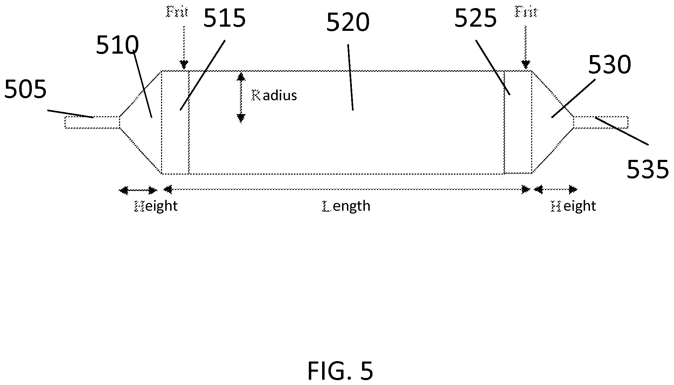

According to a first mixing device of the invention , FIG. **5** shows a conical expansion flow chamber. Fluid may flow in through an inlet port **505,** then expand through a conical expansion element **510,** before passing through a first frit **515** into a cylindrical chamber **520.** The cylindrical chamber has a defined radius and length. After the flow chamber, the fluid may then pass through a second frit **525,** and through a conical compression element **530** before exiting through an outlet port **535.** The chamber **520** is filled or at least partially filled with packing material to form one or more flow paths therethrough. The shape of the chamber in connection with the paths formed through the packing material gives rise to turbulent flow, which in turn enables mixing of different flow streams.

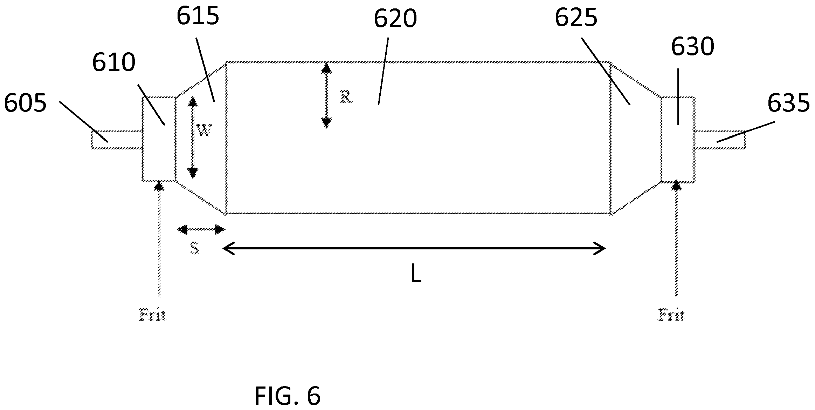

According to a second mixing device of the invention, embodiment, FIG. **6** shows a gradual expansion flow chamber. Fluid may flow in through an inlet port **605,** then pass through a first frit **610** before expanding through an expansion element **615.** The fluid may then flow through a cylindrical tube **620** having a defined length and radius, before entering a compression element **625** and a second frit **630** and finally passing through an outlet port **635.** The chamber **620** is filled or at least partially filled with packing material to form one or more flow paths therethrough. The shape of the chamber in connection with the paths formed through the packing material gives rise to turbulent flow, which in turn enables mixing of different flow streams.

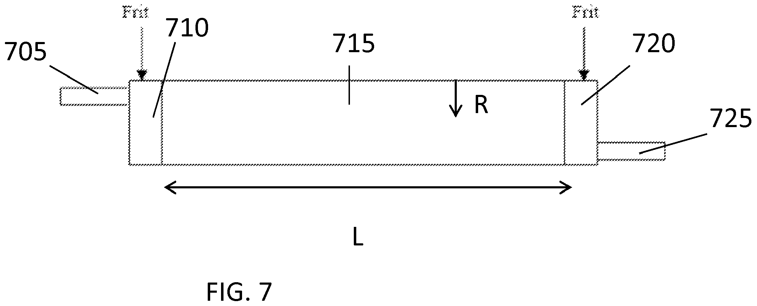

In another example not forming part of the invention, FIG. **7** shows an asymmetrically aligned inlet/outlet flow chamber. Fluid may enter through an inlet port **705** and pass through a first frit **710.** The fluid may then flow through a cylindrical column **715** before passing through a second frit **720,** and out through an outlet port **725.** Importantly, the outlet port **725** is disposed asymmetrically relative to the inlet port, such that the fluid may not flow in a straight line through the chamber **715.** The chamber **715** is filled or at least partially filled with packing material to form one or more flow paths therethrough. The shape of the chamber in connection with the paths formed through the packing material gives rise to turbulent flow, which in turn enables mixing of different flow streams.

The packing material in combination with the internal geometry of the mixing device creates and enhances turbulence in fluids to ensure effective mixing within the chamber. In one embodiment, the packing material is in the form of particles. In another embodiment, the packing material is a porous monolith. In any embodiment, multiple pathways through the chamber are created to generate turbulent flow conditions. In some embodiments, the particles of the packing material can be made from various compositions and dimensions, such as silica and polymeric materials, and the dimensions vary from several microns to a few thousands microns in its diameter. In some embodiments, the porous monolith forming the packing material is a silica gel. In some embodiments, the plurality of the particles is chemically inert. In some embodiments, the plurality of particles comprise an inorganic material, a metal oxide, a polymer, or a combination thereof. These characteristics of the filled particles can effectively create a turbulent environmental setting that ensures a high efficient mixing.

In some embodiments, the packing material filling or partially filling the mixing device to enhance turbulent flow can be chemically inert to the fluids passing therethrough. For example, the packing material is chemically inert to the mobile phase, modifier, and sample. In some embodiments, the packing material is chemically tailored to retain one or more of the mobile phase, modifier, or sample. For example, the packing material can be treated with a coating of a material which is more retentive to the sample than the mobile phase and modifier. As a result, the sample is retained for a longer period of time than the mobile phase or modifier, and this leads to a more narrow bolus of the sample of interest prior to entering the chromatography column. The chemical material may be deposited directly on the packing material (e.g. particles are infiltrated into the void space of the monolith). In some embodiments, the packing material itself is treated, (e.g. covalently capping the siloxy groups of the silica monolith) to create different properties.

A chromatography system that includes the mixing device can optimize the performance of the chromatography system. The chromatography system with the mixing device can create unique characteristics that demonstrate multiple types of affinity to analytes based on their diverse physical properties such as hydrophobicity, adsorption and mass transfer coefficient. The molecular nature of the chemistry includes, but is not limited to, C18, C8 C4, C2, C1, silica, cyano, pyridine, diol, amino groups, titanium oxide, zirconium, polymeric styrene and vinyl. The chromatographic mechanism for these chemistries include, but are not limited to, hydrophobicity, adsorption, size-exclusion, ion-pairing, partition and affinity, among other properties.

The mixing device can also be used in a SFC system to address the inherent solvent mismatch problem when supercritical carbon dioxide is used as the mobile phase by injection of a sample plug with a different solvent strength than the mobile phase. The mass transfer characteristics from supercritical fluids are used to enable an instantaneous and effective turbulence section at the location in the SFC system where the sample is introduced. This can result in significantly improved chromatographic performance in SFC systems, especially in terms of loading capacity, resolutions, sensitivity, peak shape, and peak symmetry.

The technology described herein can be effectively used for sample treatment in common LC techniques such as reverse-phase LC (RPLC) and normal phase LC (NPLC) by customized designs based on their unique prevailing and complementing separation mechanisms. For example, in RPLC the mechanism can be optimized mainly based on hydrophobicity, while in NPLC the mechanism can be optimized on partition and adsorption, in addition to other available mechanisms.

The mixing device is applicable to chromatography instruments at both analytical and preparative scales. Various dimension and capacity designs can be adapted to fit to chromatography instruments based on processing capacities. Overall improvements in chromatography can be achieved from all these designs.

## Claims

1. A turbulent flow mixing device (205) for mixing at least two fluids in a chromatography system (200), the device comprising:
an exterior housing (150, 155) having a first end and a second end,
a hydraulic flow connector at the first end of the exterior housing (150, 155), and
a cartridge including a chamber enclosed within the exterior housing (150,155) and having an inlet port (505) and an outlet port (535), the chamber having an interior volume defined by a conical expansion element (510), a cylindrical chamber (520) having a defined radius and length, and a conical compression element (530), the cylindrical chamber (520) being filled with a packing material to form one or more flow paths therethrough, and having a first frit (515) and a second frit (525),
so that fluid flowing through the inlet port (505) expands through the conical expansion element (510) before it passes through the first frit (515) into the cylindrical chamber (520) and from there through the second frit (525) and the conical compression element (530) before it exits through the outlet port (535), and
the packing material in combination with the interior volume creates a turbulent flow condition to mix the at least two fluids and provide flow through the cartridge during operation of the chromatography system (200).

2. A turbulent flow mixing device (205) for mixing at least two fluids in a chromatography system (200), the device (205) comprising:
an exterior housing (150, 155) having a first end and a second end,
a hydraulic flow connector at the first end of the exterior housing (150,155), and
a cartridge enclosed within the exterior housing (150, 155), the cartridge having an inlet port (605) and an outlet port (635), a first frit (610) and a second frit (630), and a chamber having an interior volume defined by a conical expansion element (615), a cylindrical tube (620) having a defined radius and length, and a conical compression element (625), the cylindrical tube being filled with a packing material, to form one or more flow paths therethrough,
so that fluid flowing through the inlet port (605) and passing through the first frit (610) expands through the conical expansion element (615) before it flows through the cylindrical tube (620) and from there enters the conical compression element (625) and second frit (630), and finally passes through outlet port (635), and
the packing material in combination with the interior volume creates a turbulent flow condition to mix the at least two fluids and provide flow through the cartridge during operation of the chromatography system (200).

3. The device (205) of claim 1 or 2 wherein the packing material comprises a plurality of particles.

4. The device (205) of claim 3 wherein the plurality of particles have a size between about 1 micron to about 10,000 microns.

5. The device (205) of claim 3 wherein a surface of the plurality of particles is chemically inert.

6. The device (205) of claim 3 wherein the plurality of particles comprise an inorganic material, a metal oxide, a polymer, or a combination thereof.

7. The device (205) of claim 1 or 2 wherein the chromatography system (200) is a high-performance liquid chromatography system or a supercritical fluid chromatography system.

8. The device (205) of claim 3 wherein the plurality of particles are hollow.

9. The device of claim 1 or 2 wherein the packing material is a porous monolith.

10. The device of claim 9 wherein the porous monolith is a silica gel monolith.

11. The device (205) of claim 1 or 2 wherein the packing material is more retentive to the analyte of interest than to the mobile phase, such that a sample is retained for a longer period of time than a mobile phase.

## Patentansprüche

1. Mischvorrichtung (205) zum Mischen von wenigstens zwei Fluiden unter turbulentem Fluss in einem Chromatographiesystem (200), wobei die Vorrichtung (205) umfasst:
ein Außengehäuse (150, 155) mit einem ersten Ende und einem zweiten Ende,
eine hydraulische Flussverbindungseinrichtung am ersten Ende des Außengehäuses (150, 155) und
eine Kartusche mit einer Kammer, die in dem äußeren Gehäuse (150, 155) eingeschlossen ist und die eine Einlassöffnung (505) und eine Auslassöffnung (535) aufweist, wobei die Kammer ein Innenvolumen hat, das durch ein konisches Expansionselement (510) definiert ist, eine zylindrische Kammer (520) mit einem definierten Radius und einer definierten Länge, sowie ein konisches Kompressionselement (530), wobei die zylindrische Kammer (520) mit einem Packungsmaterial gefüllt ist, um einen oder mehrere Strömungswege durch die zylindrische Kammer zu bilden, und eine erste Fritte (515) und eine zweite Fritte (525) aufweist,
derart, dass das durch die Einlassöffnung (505) strömende Fluid durch das konische Expansionselement (510) expandiert, bevor es durch die erste Fritte (515) in die zylindrische Kammer (520) eintritt und von dort die zweite Fritte (525) und das konische Kompressionselement (530) passiert, bevor es durch die Auslassöffnung (535) austritt, und
das Packungsmaterial in Kombination mit dem Innenvolumen einen turbulenten Flusszustand erzeugt, um die wenigstens zwei Fluide zu mischen und einen Durchfluss durch die Kartusche während des Betriebs des Chromatographiesystems bereitzustellen (200).

2. Mischvorrichtung (205) zum Mischen von wenigstens zwei Fluiden unter turbulentem Fluss in einem Chromatographiesystem (200), wobei die Vorrichtung (205) umfasst:
ein Außengehäuse (150, 155) mit einem ersten Ende und einem zweiten Ende,
eine hydraulische Flussverbindungseinrichtung am ersten Ende des Außengehäuses (150, 155), und
eine Kartusche, die in dem Außengehäuse (150, 155) eingeschlossen ist, wobei die Kartusche eine Einlassöffnung (605) und eine Auslassöffnung (635), eine erste Fritte (610) und eine zweite Fritte (630) aufweist sowie eine Kammer mit einem Innenvolumen, das durch ein konisches Expansionselement (615) definiert ist, ein zylindrisches Rohr (620) mit einem definierten Radius und einer definierten Länge, sowie ein konisches Kompressionselement (625), wobei das zylindrische Rohr mit einem Packungsmaterial gefüllt ist, um einen oder mehrere Strömungswege durch das zylindrische Rohr zu bilden,
derart, dass das durch die Einlassöffnung (605) strömende und die erste Fritte (610) passierende Fluid durch das konische Expansionselement (615) expandiert, bevor es durch das zylindrische Rohr (620) strömt und von dort das konische Kompressionselement (625) und die zweite Fritte (630) und schließlich die Auslassöffnung (635) passiert, und
wobei das Packungsmaterial in Kombination mit dem Innenvolumen einen turbulenten Flusszustand erzeugt, um die wenigstens zwei Fluide zu mischen und einen Durchfluss durch die Kartusche während des Betriebs des Chromatographiesystems bereitzustellen (200).

3. Vorrichtung (205) nach Anspruch 1 oder 2, wobei das Packungsmaterial eine Vielzahl von Teilchen umfasst.

4. Vorrichtung (205) nach Anspruch 3, wobei die Vielzahl von Teilchen eine Größe zwischen etwa 1 µm und etwa 10.000 µm hat.

5. Vorrichtung (205) nach Anspruch 3, wobei eine Fläche der Vielzahl von Teilchen chemisch inert ist.

6. Vorrichtung (205) nach Anspruch 3, wobei die Vielzahl von Teilchen ein anorganisches Material, ein Metalloxid, ein Polymer oder eine Kombination davon umfassen.

7. Vorrichtung (205) nach Anspruch 1 oder 2, wobei das Chromatographiesystem (200) ein Hochleistungsflüssigkeitschromatographiesystem oder ein superkritisches Flüssigkeitschromatographiesystem ist.

8. Vorrichtung (205) nach Anspruch 3, wobei die Vielzahl von Teilchen hohl ist.

9. Vorrichtung nach Anspruch 1 oder 2, wobei das Packungsmaterial ein poröser Monolith ist.

10. Vorrichtung nach Anspruch 9, wobei der poröse Monolith ein Silicagel-Monolith ist.

11. Vorrichtung (205) nach Anspruch 1 oder 2, wobei das Packungsmaterial für den interessierenden Analyten zurückhaltender ist als für die mobile Phase, so dass eine Probe für eine längere Zeitdauer zurückgehalten wird als eine mobile Phase.

## Revendications

1. Dispositif de mélange à écoulement turbulent (205) destiné à mélanger au moins deux fluides dans un système chromatographique (200), le dispositif (205) comprenant :
un boîtier externe (150, 155) présentant une première extrémité et une seconde extrémité,
un raccord d'écoulement hydraulique au niveau de la première extrémité du boîtier externe (150, 155), et
une cartouche incluant une chambre entourée par le boîtier externe (150, 155) et possédant un orifice d'entrée (505) et un orifice de sortie (535), la chambre ayant un volume intérieur défini par un élément d'expansion conique (510), une chambre cylindrique (520) ayant un rayon et une longueur définis et un élément de compression conique (530), la chambre cylindrique (520) étant remplie avec un matériau de garnissage pour former une ou plusieurs trajectoires d'écoulement au travers de celle-ci, et comportant un premier fritté (515) et un second fritté (525),
de telle sorte que le fluide s'écoulant au travers de l'orifice d'entrée (505) passe au travers de l'élément d'expansion conique (510) avant de passer au travers du premier fritté (515) pour entrer dans la chambre cylindrique (520) et à partir de là passe au travers du second fritté (525) et de l'élément de compression conique (530) avant de sortir par l'orifice de sortie (535), et
le matériau de garnissage, combiné au volume intérieur, crée une condition d'écoulement turbulent pour mélanger les au moins deux fluides et assurer un écoulement au travers de la cartouche pendant le fonctionnement du système chromatographique (200).

2. Dispositif de mélange à écoulement turbulent (205) destiné à mélanger au moins deux fluides dans un système chromatographique (200), le dispositif (205) comprenant :
un boîtier externe (150, 155) présentant une première extrémité et une seconde extrémité,
un raccord d'écoulement hydraulique au niveau de la première extrémité du boîtier externe (150, 155), et
une cartouche entourée par le boîtier externe (150, 155), la cartouche possédant un orifice d'entrée (605) et un orifice de sortie (635), un premier fritté (610) et un second fritté (630), et une chambre ayant un volume intérieur défini par un élément d'expansion conique (615), un tube cylindrique (620) ayant un rayon et une longueur définis et un élément de compression conique (625), le tube cylindrique étant rempli avec un matériau de garnissage pour former une ou plusieurs trajectoires d'écoulement au travers de celui-ci,
de telle sorte que le fluide s'écoulant au travers de l'orifice d'entrée (605) et passant au travers du premier fritté (610) passe au travers de l'élément d'expansion conique (615) avant de s'écouler au travers du tube cylindrique (620) et à partir de là pénètre dans l'élément de compression conique (625) et le second fritté (630), et passe finalement au travers de l'orifice de sortie (635), et
le matériau de garnissage, combiné au volume intérieur, crée une condition d'écoulement turbulent pour mélanger les au moins deux fluides et assurer un écoulement au travers de la cartouche pendant le fonctionnement du système chromatographique (200).

3. Dispositif (205) selon la revendication 1 ou 2, dans lequel le matériau de garnissage comprend une pluralité de particules.

4. Dispositif (205) selon la revendication 3, dans lequel la pluralité de particules ont une taille d'environ 1 micron à 10.000 microns.

5. Dispositif (205) selon la revendication 3, dans lequel la surface de la pluralité de particules est chimiquement inerte.

6. Dispositif (205) selon la revendication 3, dans lequel la pluralité de particules comprennent un matériau inorganique, un oxyde de métal, un polymère ou une combinaison d'entre eux.

7. Dispositif (205) selon la revendication 1 ou 2, dans lequel le système chromatographie (200) est un système de chromatographie liquide à haute performance ou un système de chromatographie à fluide supercritique.

8. Dispositif (205) selon la revendication 3, dans lequel la pluralité de particules sont creuses.

9. Dispositif selon la revendication 1 ou 2, dans lequel le matériau de garnissage est un monolithe poreux.

10. Dispositif selon la revendication 9, dans lequel le monolithe poreux est un monolithe de gel de silice.

11. Dispositif (205) selon la revendication 1 ou 2, dans lequel le matériau de garnissage a une capacité de rétention plus grande de la substance à analyser que de la phase mobile de telle sorte qu'un échantillon est retenu pendant une période plus longue que la phase mobile.
